# EUROPÄISCHE PATENTSCHRIFT

(11) **EP 2 055 164 B1**
(45) Veröffentlichungstag und Bekanntmachung des Hinweises auf die Patenterteilung: **14.09.2011**
(21) Anmeldenummer: 08013525.4
(22) Anmeldetag: 28.07.2008
(51) Int. Cl.: A01B 29/04, A01B 73/04

(54) **Einklappbare landwirtschaftliche Gerätekombination**
Foldable combination of agricultural tools
Combinaison d'appareils agricoles pliable

(30) Priorität: 02.11.2007 DE 102007052425
(43) Veröffentlichungstag der Anmeldung: 06.05.2009
(73) Patentinhaber: Lemken GmbH & Co. KG, 46519 Alpen (DE)
(72) Erfinder: Werries, Dieter, 46519 Alpen (DE); Gebbeken, Marin, 46519 Alpen (DE); Paeßens, Christian, 47475 Kamp-Lintfort (DE)
(74) Vertreter: Schulte & Schulte

(56) Entgegenhaltungen:
- EP-A- 1 527 665
- WO-A-2005/115124
- US-A- 4 168 750

## Beschreibung

Die Erfindung betrifft ein Bodenbearbeitungsgerät gemäß dem Oberbegriff der Ansprüche 1 und 3.

Bekannt sind einklappbare landwirtschaftliche Gerätekombinationen mit Fahrwerkspackerwalze, deren Mittelteil als Fahrwerk ausgebildet ist und deren Seitenteile einklappbar sind. In Arbeitsstellung arbeitet die Fahrwerkspackerwalze als dreiteilige Fahrwerkspackerwalze mit dem üblichen Nachteil, dass die Seitenteile keine Bodenanpassung zulassen oder von der Spurrille des Zugfahrzeugs derartig beeinflusst werden, dass sie schief laufen. Dies ermöglicht kein optimales Saatbett für die nachfolgende Aussaat von Saatgut. Aus der EP 1 527 665 A1 ist ein Bodenbearbeitungsgerät mit Walzen bekannt. Diese Walzen sollen sich um eine erste Achse frei drehen lassen können, die lotrecht zu und in der gleichen Ebene mit der Drehachse der Walzen angeordnet ist. Die Aufhängung umfasst eine zweite Achse, die parallel an dem Schwingrahmen vorgesehen ist. Damit sollen sämtliche Unebenheiten im Boden ausgeglichen werden können. Die Möglichkeiten, die jeweiligen Packereinheiten miteinander zu kombinieren, sind allerdings bei diesem Bodenbearbeitungsgerät begrenzt, insbesondere was auch das Zusammenspiel zwischen Fahrtstellung und Transportstellung betrifft.

Der Erfindung liegt die Aufgabe zugrunde, eine einklappbare landwirtschaftliche Gerätekombination mit mindestens drei Einheiten von Fahrwerkspackerwalzen zu schaffen, die während der Arbeit eine optimale Führung der Fahrwerkspackerwalze sicherstellt.

Diese Aufgabe wird nach einer ersten Variante der Erfindung nach den Merkmalen der Patentansprüche 1 und 3 gelöst. Durch diese besondere Ausbildung der Fahrwerkspackerwalze, die quasi aus vier teilweise verschieden miteinander kombinierbaren Einheiten besteht, werden für die Arbeit die Einheiten so miteinander verbunden, dass zwei Walzeneinheiten gebildet werden, die eine optimale Führung der Bestellkombination sowie eine besonders gute Bodenanpassung sicherstellen. Für die Transportfahrt werden die Walzeneinheiten getrennt, so dass dann ein Mittelteil gebildet wird, das aus zwei Mittelteilhälften besteht. Jede Mittelteilhälfte besteht aus einer Hälfte der zuvor beschriebenen Walzeneinheit. Die beiden Mittelteilhälften bilden hierbei das Fahrwerk für den Straßentransport oder andere Transportfahrten. Während der Arbeit können die Walzeneinheiten jeweils um in Längsrichtung befindliche Pendelachsen pendeln. Diese Pendelachsen dienen dann auch in Transportstellung für eine Bodenanpassung der jeweiligen Mittelteilhälften. Dadurch kann auch bei unebenen Straßen eine sichere Transportfahrt gewährleistet werden.

Erfindungsgemäß ist weiter vorgesehen, dass die jeweilige Pendelachse in ausgeklappter Arbeitsstellung mittig oder annähernd mittig zur Walzeneinheit angeordnet ist. Diese Art der Anordnung der Pendelachse gewährleistet eine gute Bodenanpassung der jeweiligen Walzeneinheit, insbesondere während der Arbeit. Dabei ist erfindungsgemäß auch vorgesehen, dass die jeweilige Pendelachse bzw. Schwenkachse zusammengefasst sein kann, so dass dann die Anzahl der Achsen insgesamt halbiert wird. Die Pendelachse dient dann als Schwenkachse bzw. die Schwenkachse auch als Pendelachse.

Die Aufgabe wird nach einer zweiten Variante der Erfindung nach den Merkmalen des Patentanspruchs 3 gelöst.

Gemäß der Erfindung wird weiter vorgeschlagen, dass auf jeder Seite zwei Pendelachsen vorgesehen sind, die in Arbeitsstellung annähernd hintereinander angeordnet sind, dass vorzugsweise eine Pendelachse dem Schwenkkasten und dem Grundrahmen und vorzugsweise die andere Pendelachse dem Rahmen und dem Zwischenarm zugeordnet ist, wobei der Rahmen begrenzt schwenkbar mit dem Zwischenarm verbunden ist und zusammen mit dem Zwischenrahmen um die Schwenkachse ca. 90° einschwenkbar ausgebildet ist. Durch diese besondere Ausbildungsform werden die Seitenteile letztendlich in der Transportstellung vor den Mittelteilhälften getrennt. Wenn sich während der Transportfahrt die jeweilige Mittelteilhälfte zum Beispiel der Straßenwölbung anpasst, wird diese Bewegung nicht auf die Seitenteile übertragen. Unter Beibehaltung der bisher angesprochenen Vorteile, kann so auch eine kompakte Bestellkombination bereitgestellt werden, bei der nicht zusätzliche Freiräume geschaffen werden müssen, die nur dazu dienen, Ausgleichbewegungen von Walzen und anderen Bauteilen ausgleichen zu können.

Die Erfindung sieht weiter vor, dass sich in Arbeitsstellung der Rahmen mit den am Rahmen angeordneten Rädern über einen Anschlag gegen den Schwenkkasten abstützt und so mit dem Schwenkkasten und den daran angeordneten Rädern eine starre Walzeneinheit bildet. Durch das Vorsehen eines einfachen Anschlages ist mit einfachen Mitteln sichergestellt, dass das jeweilige Seitenteil in Arbeitsstellung mit der Mittelteilhälfte eine gut geführte Einheit bildet und in der eingeklappten Transportstellung eine physische Trennung erfolgt.

Nach einer weiteren vorteilhaften Ausführungsform der Erfindung ist ein Energiespeicher vorgesehen, der im Abstand zur Pendelachse am Schwenkkasten angreift und für eine gleich bleibende Radbelastung der Räder der jeweiligen Mittelteilhälfte sorgend ausgebildet ist. Durch das Vorsehen eines Energiespeichers kann die Pendelachse auch außer mittig von der Mittelteilhälfte angeordnet werden. Die dadurch auftretenden ungleichen Belastungen der einzelnen Räder der Mittelteilhälfte werden so durch den Energiespeicher ausgeglichen. Der Energiespeicher ist so ausgebildet, dass er eine Bodenanpassung der Fahrwerkspackerwalze unter Beibehaltung eines gleichen Raddruckes für die einzelnen Räder zulässt. Die Pendelachse kann so beispielsweise ganz außen liegen und für einen extrem sicheren Straßentransport sorgen, sie erlaubt aber auch über den Energiespeicher eine individuelle Bodenanpassung der als Fahrwerk dienenden Packerwalze bzw. Reifenpackerwalze.

Erfindungsgemäß ist weiter vorgesehen, dass der Energiespeicher als Hydraulikzylinder mit Hydrospeicher ausgebildet ist. Anstatt einer Feder oder anderer elastisch vorspannbarer Bauteile kann so ein einfacher Hydraulikzylinder mit Hydrospeicher eingesetzt werden, der je nach Gewichtsbelastung unterschiedlich mit Öldruck beaufschlagt wird. So wird sichergestellt, dass eine sichere Transportfahrt ermöglicht wird, sowohl bei vollem Saatgutbehälter als auch bei leerem Saatgutbehälter der Bestellkombination.

Die Erfindung sieht weiter vor, dass der Systemdruck im Hydraulikzylinder lastabhängig geregelt wird. Abhängig vom Beladungszustand der Bestellkombination wird auch der Systemdruck im als Energiespeicher dienenden Hydraulikzylinder angepasst. In jeder Fahrsituation ist so eine sichere Transportfahrt ermöglicht, ohne dass der Fahrer Anpassungsarbeiten durchführen muss.

Weitere Einzelheiten der Erfindung sind den Figuren und der Figurenbeschreibung zu entnehmen. Es zeigen:
- Figur 1: die Vorderseite einer einseitig um 90° eingeklappten Fahrwerkspackerwalze,
- Figur 2: die Vorderseite einer ausgeklappten Fahrwerkspackerwalze in Arbeitsstellung,
- Figur 3: die Vorderseite einer ausgeklappten Fahrwerkspackerwalze in bodenangepasster Arbeitsstellung,
- Figur 4: die Vorderseite einer einseitig um 180° eingeklappten Fahrwerkspackerwalze,
- Figur 5: die Vorderseite einer ausgeklappten Fahrwerkspackerwalze gemäß Figur 4 in bodenangepasster Arbeitsstellung,
- Figur 6: die Vorderseite einer ausgeklappten Fahrwerkspackerwalze mit zusätzlicher Pendelachse und
- Figur 7: die Vorderseite der teilweise eingeklappten Fahrwerkspackerwalze gemäß Figur 6.

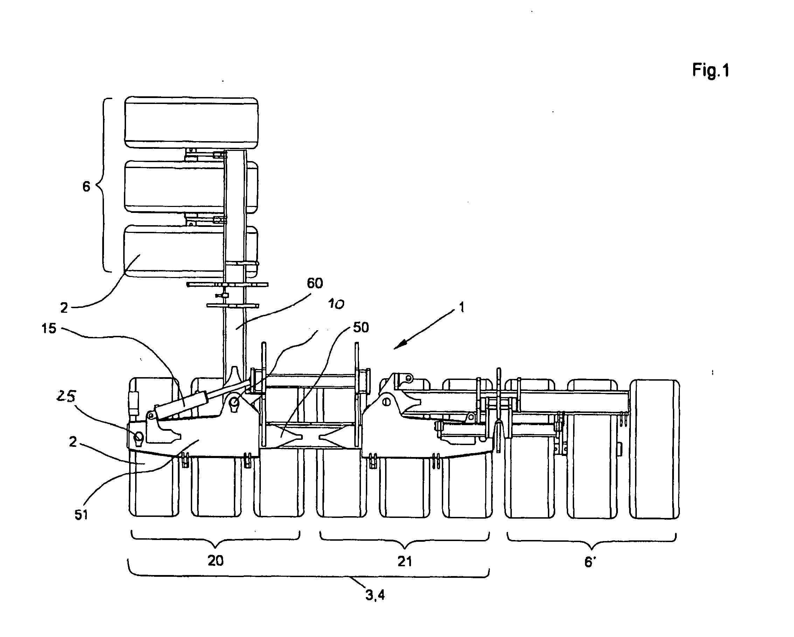

Figur 1 zeigt die einseitig eingeklappte Fahrwerkspackerwalze 2 der landwirtschaftlichen Gerätekombination 1. Das Mittelteil 3 wird durch die rechte Mittelteilhälfte 20 und die linke Mittelteilhälfte 21 gebildet und dient als Fahrwerk 4. Das rechte Seitenteil 6 ist um 90° um die Schwenkachse 10 mittels des Hydraulikzylinders 15 eingeklappt. Der Hydraulikzylinder 15 ist einerseits am Seitenteil 60 und andererseits am Schwenkkasten 51 angelenkt, der sowohl die Schwenkachse 10 als auch die Pendelachse 25 aufnimmt. Der Schwenkkasten 51 mit Seitenteil 6 kann um die Pendelachse 25 durch nicht dargestellte und vorzugsweise einstellbare Anschläge begrenzt schwenken. Der Schwenkkasten 51 ist in eingeklappter Stellung gesperrt bzw. gleichdruckgeführt und kann in ausgeklappter Arbeitsstellung um die Pendelachse 25 begrenzt schwenken.

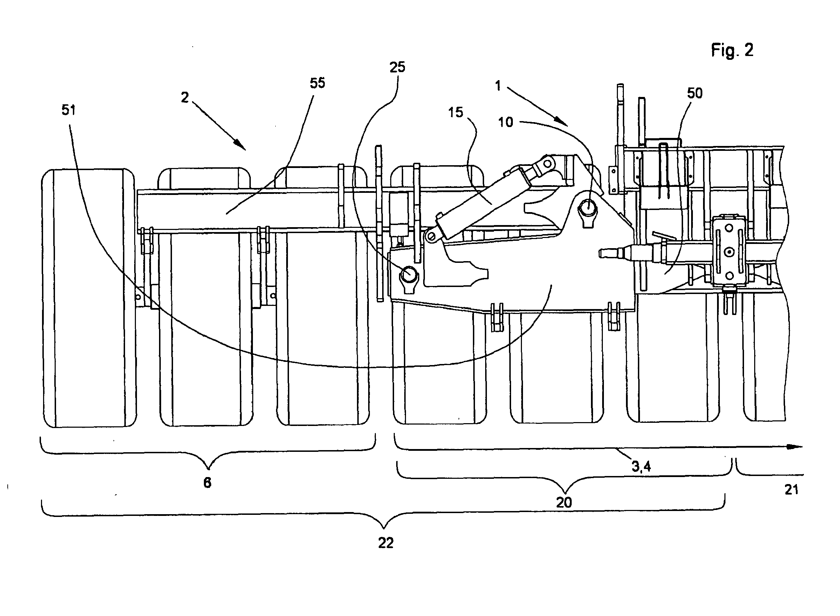

Figur 2 zeigt die rechte Hälfte der ausgeklappten Fahrwerkspackerwalze 2 in Arbeitsstellung. Über den Hydraulikzylinder 15 wird der Seitenrahmen 55 des Seitenteils 6 mit dem Schwenkkasten 51 fixiert. Das Seitenteil 6 und die rechte Mittelteilhälfte 20 sind so zu einer Walzeneinheit 22 zusammengefasst, die um die Pendelachse 25 begrenzt schwenken kann.

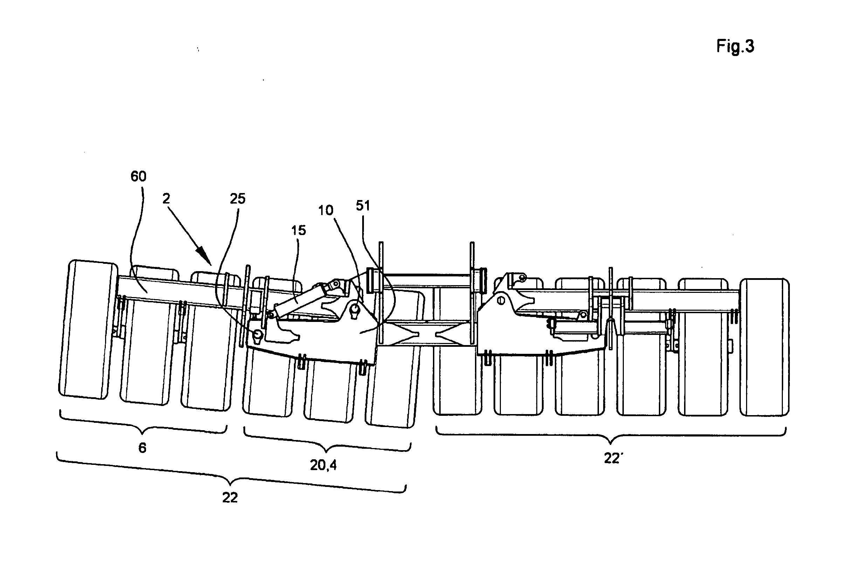

Figur 3 zeigt eine bodenangepasste Schrägstellung der rechten Walzeneinheit 22 und verdeutlicht, wie das Seitenteil 6 mit der rechten Mittelteilteilhälfte 20 eine starre Walzeneinheit 22 bildet. Die Schwenkachse 10 zwischen dem Seitenteil 6 mit ihrem Rahmen 60 und die am Schwenkkasten 51 angeordnete Mittelteilhälfte 20 werden über den Hydraulikzylinder 15 gesperrt und bilden eine Walzeneinheit 22. Die Walzeneinheit 22 kann nur noch um die Pendelachse 25 schwenken. Die rechte Mittelteilhälfte 20 ist Teil des Fahrwerks 4. Die linke Walzeneinheit ist mit dem Bezugszeichen 22' bezeichnet.

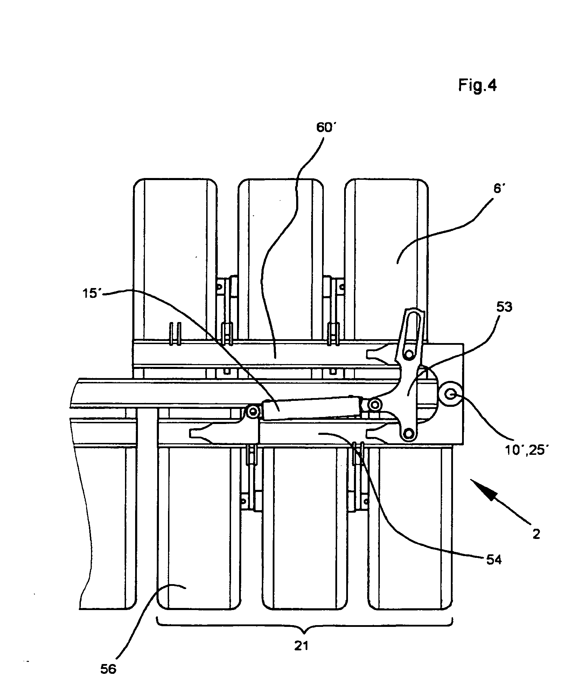

Figur 4 zeigt eine Ausführung mit um 180° eingeklappter Fahrwerkspackerwalze 2. Das linke eingeklappte Seitenteil 6' mit seinem Rahmen 60' befindet sich oberhalb der linken Mittelteilhälfte 21 und wurde um die Schwenkachse 10' mittels Hydraulikzylinder 15' und Schwenkgetriebe 53 eingeklappt. In eingeklappter Transportstellung kann die als Fahrwerk 4 dienende linke Mittelteilhälfte 21 mit Rahmen 54 nur um die Pendelachse 25' schwenken, die gleichzeitig auch als Schwenkachse 10' dient. Über eine Transportvorrichtung wird die Schwenkbarkeit der Mittelteilhälfte 21 bzw. deren Rahmen 54 um die Pendelachse 25' derart bewerkstelligt, dass alle Räder 56 der Mittelteilhälfte 21 der Fahrwerkspackerwalze 2 mit dem gleichen Gewicht belastet werden. In einer anderen Ausführung werden die äußeren Räder 56 der Mittelteilhälfte mit mehr Gewicht belastet als die inneren Räder, um so eine stabilere Transportstellung zu gewährleisten, auch in Verbindung mit einer Einzelradbremsanlage.

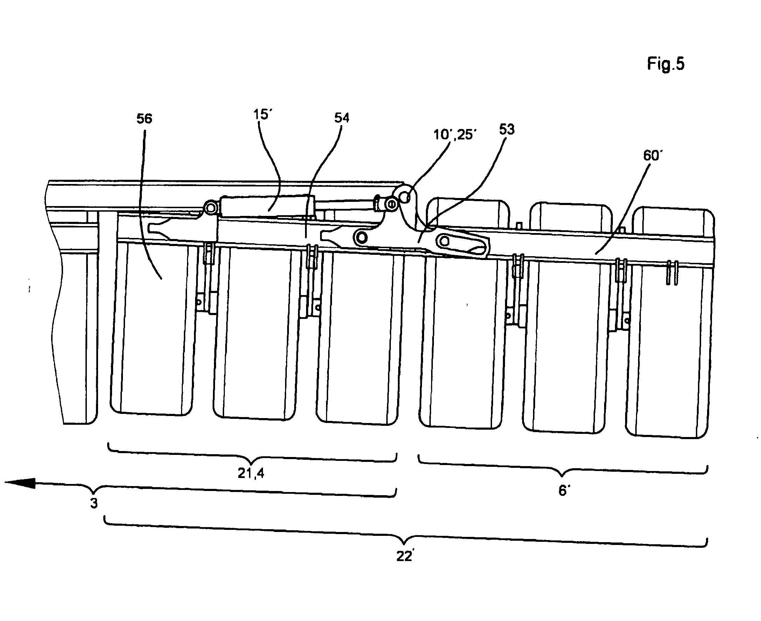

Figur 5 zeigt die um 180° einklappbare Ausführung der Fahrwerkspackerwalze 2 in ausgeklappter Arbeitsstellung. Über den Hydraulikzylinder 15' und das Schwenkgetriebe 53 wird das Seitenteil 6' mit der linken Mittelteilhälfte 21 zu einer Walzeneinheit 22' verstarrt. Die Schwenkachse 10' dient hier gleichzeitig auch als Pendelachse 25', die in Arbeitsstellung annähernd mittig zur Walzeneinheit 22' angeordnet ist.

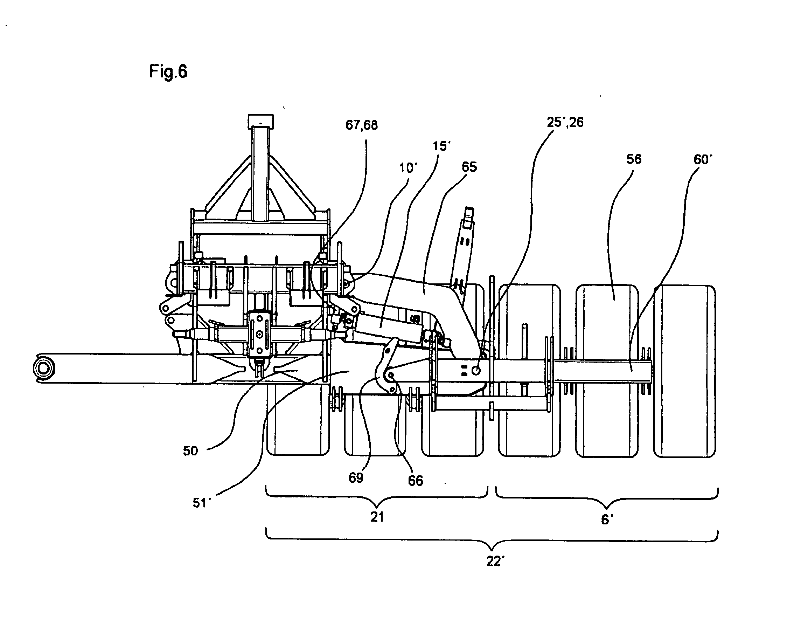

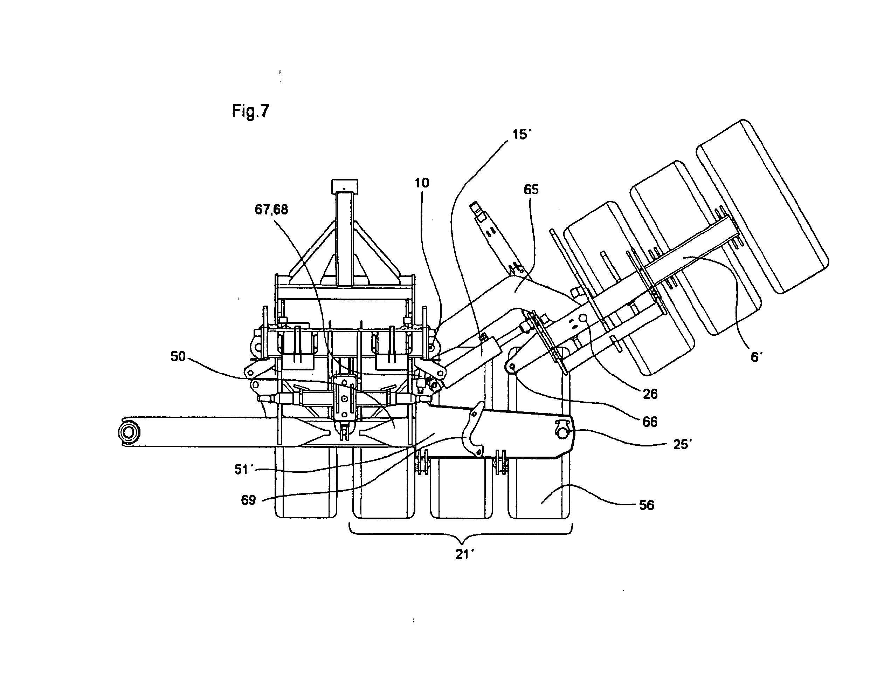

Figur 6 zeigt die Vorderseite einer ausgeklappten Fahrwerkspackerwalze 2 mit zusätzlicher Pendelachse 26. Zur Verdeutlichung wurde hier die zugehörige linke Mittelteilhälfte 21 nicht abgebildet. Das Seitenteil 6' mit den Rädern 56 ist am linken Rahmen 60' angeordnet. Der linke Rahmen 60' ist über die zusätzliche Pendelachse 26 mit dem Zwischenrahmen 65 verbunden, der wiederum um die Schwenkachse 10' mit dem Grundrahmen 50 verbunden ist. Über dem Anschlag 66, der in die Fangtasche 69 eingreift, bilden das linke Seitenteil 6' und die linke Mittelteilhälfte 21 die starre Walzeneinheit 22'. In Arbeitsstellung kann das Seitenteil 6' seine Stellung zur Mittelteilhälfte 21 nicht verändern. Die Bodenanpassung der Walzeneinheit 22' erfolgt um die hinter der zusätzlichen Pendelachse 26 angeordneten Pendelachse 25' und um die Pendelachse 26. Dass hier insgesamt zwei Pendelachsen vorgesehen sind, ist insbesondere der Figur 7 zu entnehmen. Die Pendelachse 25' liegt hier hinter der zusätzlichen Pendelachse 26. Der Anschlag 66 ist dem Schwenkkasten 51' zugeordnet. Der Schwenkkasten ist über die Pendelachse 25' begrenzt schwenkbar mit dem Grundrahmen 50 verbunden. Wenn das Seitenteil 6' eingeklappt ist, pendelt die linke Mittelteilhälfte 21 um die dann außen liegende Pendelachse 25'. Das außen liegende Rad würde dann sehr viel mehr Gewicht tragen müssen als die anderen Räder 56 der linken Mittelteilhälfte 21. Über den Energiespeicher 67, der als Hydraulikzylinder ausgebildet ist, wird auf dem Schwenkkasten 51' eine Kraft derart ausgeübt, dass alle Räder 56 der linken Mittelteilhälfte 21 mit dem gleichen Raddruck belastet sind. Der Hydraulikzylinder 68 steht in Verbindung mit einem Hydrospeicher, der es zulässt, dass die linke Mittelteilhälfte 21 in Transportstellung sich der Bodenkontur anpassen kann, da der Hydraulikzylinder 68 permanent unter Druck gehalten wird.

Figur 7 zeigt die Ausführung gemäß Figur 6, bei der jedoch das Seitenteil 6' teilweise eingeklappt ist. Figur 7 verdeutlicht, dass die Pendelachsen 25' und 26 an getrennten Bauteilen vorgesehen sind. In Arbeitsstellung liegen sie hintereinander, damit eine problemlose Bodenanpassung der Walzeneinheit 22', die aus der linken Mittelteilhälfte 21 und dem linken Seitenteil 6' besteht sichergestellt ist. Siehe dazu auch Figur 6. Die Figur 7 verdeutlicht auch, dass das Seitenteil 6' nicht mehr kinematisch mit der linken Mittelteilhälfte 21 in Verbindung steht. Wenn die linke Mittelteilhälfte 21 um die Pendelachse 25' pendelt, hat diese Bewegung keinen Einfluss auf das Seitenteil 6'. Dafür dass die einzelnen Räder 56 alle mit der gleichen Druckbelastung auf den Boden aufliegen, sorgt der Energiespeicher 67, der hier als Hydraulikzylinder 68 ausgebildet ist. Der Anschlag 66 steht auch nicht mehr in Verbindung mit der Fangtasche 69, was mit Ursache dafür ist, dass das Seitenteil nicht mehr kinematisch mit der linken Mittelteilhälfte in Verbindung steht.

## Patentansprüche

1. Einklappbare landwirtschaftliche Gerätekombination (1) mit Fahrwerkspackerwalze (2), z.B. eine Bestellkombination, mit einem Scharrahmen mit Säscharen, wobei die Fahrwerkspackerwalze (2) aus einem Mittelteil (3) und aus links und rechts von dem Mittelteil (3) angeordneten Seitenteilen (6) besteht, die jeweils um horizontale und in Arbeitsrichtung angeordnete Schwenkachsen (10) über Hydraulikzylinder (15) ein- und ausklappbar sind,
**dadurch gekennzeichnet,**
**dass** das Mittelteil (3) der Fahrwerkspackerwalze (2) zweiteilig und als Fahrwerk (4) ausgebildet ist und aus einer rechten Mittelteilhälfte (20) und einer linken Mittelteilhälfte (21) besteht, dass in ausgeklappter Arbeitsstellung das jeweilige Seitenteil (6) mit der benachbarten Mittelteilhälfte (20, 21) eine starre Walzeneinheit (22) bildet und dass jede Walzeneinheit (22) aus Seitenteil (6) und Mittelteilhälfte (20, 21) eine in Arbeitsrichtung angeordnete horizontale Pendelachse (25) aufweist, die jeweils im Abstand zur Schwenkachse (10) angeordnet ist und eine Bodenanpassung der jeweiligen Walzeneinheit (22) zulassend ausgebildet ist.

2. Gerätekombination nach Anspruch 1,
**dadurch gekennzeichnet,**
**dass** die jeweilige Pendelachse (25) in ausgeklappter Arbeitsstellung mittig oder annähernd mittig zur Walzeneinheit (22) angeordnet ist.

3. Einklappbare landwirtschaftliche Gerätekombination (1) mit Fahrwerkspackerwalze (2), z.B. eine Bestellkombination, mit einem Scharrahmen mit Säscharen, wobei die Fahrwerkspackerwalze (2) aus einem Mittelteil (3) und aus links und rechts von dem Mittelteil (3) angeordneten Seitenteilen (6) besteht, die jeweils um horizontale und in Arbeitsrichtung angeordnete Schwenkachsen (10) über Hydraulikzylinder (15) ein- und ausklappbar sind,
**dadurch gekennzeichnet,**
**dass** das Mittelteil (3) der Fahrwerkspackerwalze (2) zweiteilig und als Fahrwerk (4) ausgebildet ist und aus einer rechten Mittelteilhälfte (20) und einer linken Mittelteilhälfte (21) besteht, dass in ausgeklappter Arbeitsstellung das jeweilige Seitenteil (6) mit der benachbarten Mittelteilhälfte (20, 21) eine starre Walzeneinheit (22) bildet und dass jede Walzeneinheit (22) aus Seitenteil (6) und Mittelteilhälfte (20, 21) eine in Arbeitsrichtung angeordnete horizontale Pendelachse (25) aufweist, wobei die Pendelachse (25) durch die Schwenkachse (10) gebildet wird.

4. Gerätekombination nach Anspruch 3,
**dadurch gekennzeichnet,**
**dass** die jeweilige Pendelachse (25) bzw. Schwenkachse (10) in ausgeklappter Arbeitsstellung mittig oder annähernd mittig zur Walzeneinheit (22) angeordnet ist.

5. Gerätekombination nach mindestens einem der Ansprüche 1 bis 4,
**dadurch gekennzeichnet,**
**dass** auf jeder Seite der Gerätekombination (1) zwei Pendelachsen (25, 26) vorgesehen sind, die in Arbeitsstellung annähernd hintereinander angeordnet sind.

6. Gerätekombination nach Anspruch 5,
**dadurch gekennzeichnet,**
**dass** mindestens eine Pendelachse (25) dem Schwenkkasten (51) und dem Grundrahmen (50) zugeordnet ist.

7. Gerätekombination nach Anspruch 5,
**dadurch gekennzeichnet,**
**dass** mindestens eine Pendelachse (26) dem Rahmen (60) und dem Zwischenarm (65) zugeordnet ist, wobei der Rahmen (60) begrenzt schwenkbar mit dem Zwischenarm (65) verbunden ist und zusammen mit dem Zwischenrahmen (65) um die Schwenkachse 10 ca. 90 ° einschwenkbar ausgebildet ist.

8. Gerätekombination nach mindestens einem der Ansprüche 1 bis 7,
**dadurch gekennzeichnet,**
**dass** sich in Arbeitsstellung der Rahmen (60) mit den am Rahmen (60) angeordneten Rädern (56) über einen Anschlag (66) gegen den Schwenkkasten (51) abstützt und so mit dem Schwenkkasten (51) und den daran angeordneten Rädern (56) eine starre Walzeneinheit (22) bildet.

9. Gerätekombination nach mindestens einem der Ansprüche 1 bis 8,
**dadurch gekennzeichnet,**
**dass** ein Energiespeicher (67) vorgesehen ist, der im Abstand zur Pendelachse (25) am Schwenkkasten (51) angreift und für eine gleich bleibende Radbelastung der Räder (56) der jeweiligen Mittelteilhälfte (20), (21) sorgend ausgebildet ist.

10. Gerätekombination nach Anspruch 9,
**dadurch gekennzeichnet,**
**dass** der Energiespeicher (67) als Hydraulikzylinder (68) mit Hydrospeicher ausgebildet ist.

11. Gerätekombination nach Anspruch 10,
**dadurch gekennzeichnet,**
**dass** der Systemdruck im Hydraulikzylinder (68) lastabhängig geregelt wird.

## Claims

1. A foldable agricultural equipment combination (1), comprising a chassis packer roller (2), e.g. a machinery combination, comprising a coulter frame with sowing coulters, wherein the chassis packer roller (2) consists of a middle part (3) and of side parts (6) arranged to the left and to the right of the middle part (3), said side parts each being able, via hydraulic cylinders (15), to be folded and unfolded about horizontal pivot axles (10) arranged in the working direction,
**characterised**
**in that** the middle part (3) of the chassis packer roller (2) is configured in two parts and as a chassis (4) and consists of a right-hand middle part half (20) and a left-hand middle part half (21), in that, in the unfolded working position, the respective side part (6) forms with the adjacent middle part half (20, 21) a rigid roller unit (22), and in that each roller unit (22) composed of a side part (6) and a middle part half (20, 21) has a horizontal pendulum axle (25) arranged in the working direction, said pendulum axle being arranged in each case at a distance from the pivot axle (10) and being configured so as to allow the respective roller unit (22) to adapt to the ground.

2. An equipment combination according to claim 1,
**characterised**
**in that** the respective pendulum axle (25) in the unfolded working position is arranged centrally or approximately centrally relative to the roller unit (22).

3. The foldable agricultural equipment combination (1), comprising a chassis packer roller (2), e.g. a machinery combination, comprising a coulter frame with sowing coulters, wherein the chassis packer roller (2) consists of a middle part (3) and of side parts (6) arranged to the left and to the right of the middle part (3), said side parts each being able, via hydraulic cylinders (15), to be folded and unfolded about horizontal pivot axles (10) arranged in the working direction,
**characterised**
**in that** the middle part (3) of the chassis packer roller (2) is configured in two parts and as a chassis (4) and consists of a right-hand middle part half (20) and a left-hand middle part half (21), in that, in the unfolded working position, the respective side part (6) forms with the adjacent middle part half (20, 21) a rigid roller unit (22), and in that each roller unit (22) composed of a side part (6) and a middle part half (20, 21) has a horizontal pendulum axle (25) arranged in the working direction, wherein the pendulum axle (25) is formed by the pivot axle (10).

4. The equipment combination according to claim 3,
**characterised**
**in that** the respective pendulum axle (25) or pivot axle (10) in the unfolded working position is arranged centrally or approximately centrally relative to the roller unit (22).

5. The equipment combination according to at least one of claims 1 to 4, **characterised**
**in that** two pendulum axles (25, 26) are provided on each side of the equipment combination (1), said pendulum axles being arranged approximately one behind the other in the working position.

6. The equipment combination according to claim 5,
**characterised**
**in that** at least one pendulum axle (25) is assigned to the pivot box (51) and to the base frame (50).

7. The equipment combination according to claim 5,
**characterised**
**in that** at least one pendulum axle (26) is assigned to the frame (60) and to the intermediate arm (65), wherein the frame (60) is connected to the intermediate arm (65) in such a way as to be able to pivot to a limited extent and is designed to pivot together with the intermediate frame (65) through approx. 90° about the pivot axle 10.

8. The equipment combination according to at least one of claims 1 to 7, **characterised**
**in that**, in the working position, the frame (60) with the wheels (56) arranged on the frame (60) is supported via a stop (66) against the pivot box (51) and thus forms with the pivot box (51) and the wheels (56) arranged thereon a
rigid roller unit (22).

9. The equipment combination according to at least one of claims 1 to 8, **characterised**
**in that** an energy store (67) is provided which acts on the pivot box (51) at a distance from the pendulum axle (25) and is designed to ensure a constant wheel loading of the wheels (56) of the respective middle part half (20), (21).

10. The equipment combination according to claim 9,
**characterised**
**in that** the energy store (67) is configured as a hydraulic cylinder (68) with a hydraulic accumulator.

11. The equipment combination according to claim 10,
**characterised**
**in that** the system pressure in the hydraulic cylinder (68) is regulated in a load-dependent manner.

## Revendications

1. Combinaison d'appareils agricole rétractable (1) avec rouleau compacteur à châssis (2), p. ex. une combinaison de labourage, avec un cadre de socs à socs de semoir, étant donné que le rouleau compacteur à châssis (2) se compose d'une partie centrale (3) et de pièces latérales (6) disposées à gauche et à droite de la partie centrale (3) qui peuvent chacune être rétractées et dépliées à l'aide de cylindres hydrauliques (15) autour d'axes de pivotement (10) horizontaux disposés dans le sens de travail,
**caractérisée en ce que**
la partie centrale (3) du rouleau compacteur à châssis (2) est construite en deux pièces et comme châssis (4) et se compose d'une moitié de partie centrale droite (20) et d'une moitié de partie centrale gauche (21), **en ce que**, en position de travail dépliée, la pièce latérale (6) concernée forme avec la moitié de partie centrale adjacente (20, 21) une unité rouleau (22) rigide et **en ce que** chaque unité rouleau (22) constituée de pièce latérale (6) et moitié de partie centrale (20, 21) présente un arbre oscillant (25) horizontal disposé en position de travail qui est chaque fois disposée à distance de l'axe de pivotement (10) et est formée de manière à permettre l'adaptation au sol de l'unité rouleau concernée (22).

2. Combinaison d'appareils selon la revendication 1,
**caractérisée en ce que**
l'arbre oscillant (25) chaque fois concerné est disposé en position de travail dépliée centralement ou approximativement centralement par rapport à l'unité rouleau (22).

3. Combinaison d'appareils agricole rétractable (1) avec rouleau compacteur à châssis (2), p. ex. une combinaison de labourage, avec un cadre de socs à socs de semoir, étant donné que le rouleau compacteur à châssis (2) se compose d'une partie centrale (3) et de pièces latérales (6) disposées à gauche et à droite de la partie centrale (3) qui peuvent chacune être rétractées et dépliées à l'aide de cylindres hydrauliques (15) autour d'axes de pivotement (10) horizontaux disposés dans le sens de travail,
**caractérisée en ce que**
la partie centrale (3) du rouleau compacteur à châssis (2) est construite en deux pièces et comme châssis (4) et se compose d'une moitié de partie centrale droite (20) et d'une moitié de partie centrale gauche (21), **en ce que**, en position de travail dépliée, la pièce latérale (6) concernée forme avec la moitié de partie centrale adjacente (20, 21) une unité rouleau (22) rigide et **en ce que** chaque unité rouleau (22) constituée de pièce latérale (6) et moitié de partie centrale (20, 21) présente un arbre oscillant (25) horizontal disposé en position de travail, étant donné que l'arbre oscillant est formé par l'axe de pivotement (10).

4. Combinaison d'appareils selon la revendication 3,
**caractérisée en ce que**
l'arbre oscillant (25) ou l'axe de pivotement (10) chaque fois concerné est disposé en position de travail dépliée centralement ou approximativement centralement par rapport à l'unité rouleau (22).

5. Combinaison d'appareils selon au moins l'une quelconque des revendications 1 à 4,
**caractérisée en ce que**
sont prévus de chaque côté de la combinaison d'appareils (1) deux arbres oscillants (25, 26) qui sont disposés en position de travail approximativement l'un derrière l'autre.

6. Combinaison d'appareils selon la revendication 5,
**caractérisée en ce que**
au moins un arbre oscillant (25) est affecté à la caisse pivotante (51) et au bâti d'ensemble (50).

7. Combinaison d'appareils selon la revendication 5,
**caractérisée en ce que**
au moins un arbre oscillant (26) est affecté au cadre (60) et au bras intermédiaire (65), étant donné que le cadre (60) est relié de manière pivotante limitée au bras intermédiaire (65) et, ensemble avec le cadre intermédiaire (65), peut pivoter autour de l'axe de pivotement 10 d'environ 90°.

8. Combinaison d'appareils selon au moins l'une quelconque des revendications 1 à 7,
**caractérisée en ce que**
en position de travail, le cadre (60) s'appuie avec les roues (56) disposées sur le cadre (60) via une butée (66) contre la caisse pivotante (51) et, ainsi, forme avec la caisse pivotante (51) et les roues (56) qui y sont disposées une unité rouleau rigide (22).

9. Combinaison d'appareils selon au moins l'une quelconque des revendications 1 à 8,
**caractérisée en ce que**
est prévu un accumulateur d'énergie (67) qui prend à une distance de l'arbre oscillant (25) sur la caisse pivotante (51) et est formé de manière assurer une charge constante des roues (56) de la moitié de partie centrale (20), (21) chaque fois concernée.

10. Combinaison d'appareils selon la revendication 9,
**caractérisée en ce que**
l'accumulateur d'énergie (67) est formé comme cylindre hydraulique (68) avec accumulateur hydraulique.

11. Combinaison d'appareils selon la revendication 10,
**caractérisée en ce que**
la pression de système dans le cylindre hydraulique (68) est régulée en fonction de la charge.
